Europäisches Patentamt

European Patent Office

Office européen des brevets

(19)

(11) Publication number: **0 273 301**
**A2**

(12) # EUROPEAN PATENT APPLICATION

(21) Application number: **87118672.2**

(51) Int. Cl.4: **B27N 3/00**

(22) Date of filing: **16.12.87**

(30) Priority: **29.12.86 IT 4576086**

(43) Date of publication of application:
**06.07.88 Bulletin 88/27**

(84) Designated Contracting States:
**AT BE CH DE ES FR GB GR LI NL SE**

(71) Applicant: **Lucon, Luigino**
**Via Pontuz**
**I-33080 Pasiano di Pordenone(IT)**

(72) Inventor: **Lucon, Luigino**
**Via Pontuz**
**I-33080 Pasiano di Pordenone(IT)**

(54) **Process and plant for manufacturing panels with decorated surfaces, particularly suitable for the furniture industry, as well as panel obtained by such manufacturing process.**

(57) Process for manufacturing panels with decorated surfaces and utilizable for the furniture industry in order to obtain doors, wings, frames and similar elements.

Process in which each panel is constituted by means of molding operation, effected within movable molds (8) in one or more working steps and with pre-established compression forces, of a covering layer (6) constituted by wood pulp or a mixture formed by foamed polyurethane-saw dust, wood dust and other waste materials, which layer is coated by a coating layer (7) constituted by at least a thin sheet of natural wood, onto an underlying support plate (5) made of chipboard, plywood conglomerate materials and similar materials with small specific gravity. A plant for manufacturing these panels and a panel obtained by utilizing the same are also described.

FIG.2

EP 0 273 301 A2

## "PROCESS AND PLANT FOR MANUFACTURING PANELS WITH DECORATED SURFACES, PARTICULARLY SUITABLE FOR THE FURNITURE INDUSTRY, AS WELL AS PANEL OBTAINED BY SUCH MANUFACTURING PROCESS"

The invention relates to a process and a plant for manufacturing panels with decorated surfaces, particularly utilizable for the furniture industry to form doors, wings and similar elements,as well as a panel obtained by means of such manufacturing process.

At the present time, the panels utilized in the furniture industry to form doors, wings, frames and other elements with high-relief and/or bas-relief decorated surfaces are obtained by applying one or more thin layers of natural wood, constituting the veneer, onto rigid support panels made of chipboard, agglomerated wooden panels and the like, so that these panels present the required aesthetical appearance of the natural wood at cheaper costs due to the fact that small amounts of wood, which is very expensive, are utilized for obtaining each panel of this kind.

In turn, the decorated surfaces of such panels are obtained with different working systems.

In particular, panels are known whose decorated surface is constituted by wooden strips with reduced thickness and width, which are shaped in advance to the requested profile by means of conventional machines and successively are painted and glued to the relative panels in the foreseen application position.

These panels are complicated in construction and also expensive, above all due to the fact that they utilize considerable amounts of solid wooden strips.

Moreover, panels are known whose decorated surface is constituted by a thin "sandwich" structure coating sheet, which is applied by glueing operation onto a rigid support structu re made of a material, of not high-quality chipboard and the like.

Such "sandwich" structure is constituted by an intermediate rigid element made of a thermoplastic resin or a metallic material which can be shaped in an easier manner (i.e. aluminium) and by two thin sheets made of a different material, which are applied onto and beneath such an intermediate element by means of glueing operation and which are respectively formed by a wood material (also of high-quality kind) and by another convenient material which can be glued to the wood and which also may be formed by wood material.

Besides, shaping of the "sandwich" structure referred to may be effected in different ways and with different means, i.e. by pressing, rolling and similar operations and it allows superficially shaping also with complicated forms like the high-relief and/or bas-relief ornamental decorations to be obtained, without breaking and/or cracking the elements forming the same structure.

In turn, the rigid support structure is generally obtained from parallelepiped shaped plates with determinate thickness, such as to be not excessively heavy, said plates being superficially shaped by means of conventional machines, in a manner that they present recess with different deepnesses and rectilinear profile, such as to permit the "sandwich" structure shaped as aforesaid described to be adapted and fitted thereon.

However, these kinds of panels, yet being provided with a satisfactory aesthetical appearance and being operating in a reliable way, require utilization of different materials and operating steps, above all for manufacturing the cited "sandwich" structure.

In addition, the plates constituting the rigid support structure of the same panels have a smaller thickness and therefore lesser strenght too, due to the described reasons,after that the superficial recesses have been effected and as they cannot be obtained with greater thicknesses in order do not exceed the pre-established limit weights, it follows that such plates are easily subject to get deformed, above all because of the environment thermal variations, so that also the relevant superficial coating of said plates can crack easily or anyhow be damaged in a more or less manner.

The scope of the present invention is to overcome the above mentioned drawbacks and limitations, by means of a process and a plant for manufacturing panels with decorated surfaces, which are capable of obtaining such panels rapidly and with few working operations, wherein such panels are obtained with high strenghts and an extremely limited consumption of wood material, which is a very expensive material, and therefore with reduced economic burdens as well as high productive capacity and manufacturing flexibility. This process is based substantially on the fact that plastics with several components like the foamed polyurethanes are utilized, which polyurethanes are separately introduced into the internal cavity of movable molds and mixed, at variable ratios thereof, to saw dust, wood dust, straw or other similar waste materials as well as also to eventual conventional filler materials, and that the so obtained mixture, contained within the internal cavity of such movable molds, is compressed by a movable part of the molds shaped as a piston slidable at a tightness condition into the same cavity, with pre-established compression forces, which are proportional to the density and the hardness of the products to be obtained, until the foaming of said mixture is ended.

This technology for mixing the foamed polyurethane, yet being used from a recent time, however is spreading suffi ciently rapidly in the manufacturing industries and above all in the furniture manufacturing industries, where it permits, by means of a molding operation performed in the described manner, the application of one or more thin coating wood layers onto the product constituted by a mixture of foamed polyurethane and saw dust or similar waste materials to be directly obtained.

Therefore, in this case it was possible, due to the presence of said coating layers made of natural wood, to obtain panels whose surfaces are provided with decorative ornaments and/or frames shaped with the required outline and aesthetic appearance.

However, in practice it has been found that these panels do not lend themselves for being utilized in a satisfactory manner for particular uses, such as for making furniture doors and wings and the like, since they must be constructed with pre-established density and hardness in order to have enough strenght, in which conditions the panels sometimes may be excessively heavy and thus practically not utilizable for the same uses.

Therefore, still exploiting the manufacturing technology previously described, the present invention allows panels with the pre-established weight limits, which can be utilized for the same cited uses, to be obtained.

These and other scopes are obtained, according to the invention, by means of the present process for manufacturing panels with decorated surfaces, in particular for the furniture industry, in order to obtain doors, wings and similar elements with high-relief and/or bas-relief decorated surface, by utilizing either conventional wood pulp or plastics with several components like the foamed polyurethanes, which are able to be mixed at variable ratios thereof to saw dust, wood dust or other similar waste materials, or also conventional filler materials, and by utilizing movable molds provided with at least a movable or firm plate and a firm or movable matrix, which is shaped as the outer outline of each panel to be obtained, said plate and matrix determining an internal cavity therebetween when they are reciprocally approached, as well as being utilizing a superficial coating layer formed by at least a thin sheet made of natural wood.

The process referred to is characterized in that each panel is formed by molding operation, effected with one or more working steps with pre-established compression forces, of a covering layer constituted by said wood pulp or said mixture, which is preventively introduced into said internal cavity and coated by said coating layer, onto at least an underlying support plate made of chipboard, plywood,conglomerate materials and similar material with small specific gravity.

The features and the advantages of the process according to the invention will appear more evident from the following description, by way of a not-limiting example only and with reference to the attached drawings, in which:

-fig. 1 schematically shows a longitudinal cut view of a panel obtained by the present manufacturing process;

-fig. 2 schematically shows a plant for manufacturing the panel of fig. 1 by performing the process according to the invention;

-fig. 3 shows a frontal view of a panel obtained by the present manufacturing process.

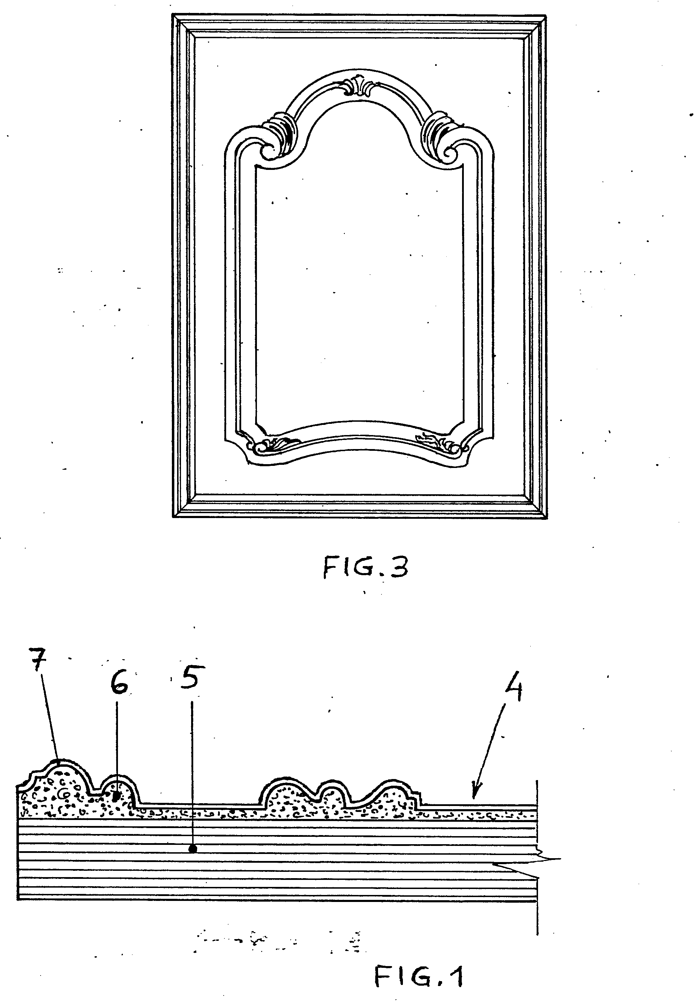

Referring to fig. 1, it is shown a panel 4 obtained by the manufacturing process according to the invention, in the manner hereinafter described, said panel being substantially constituted by at least a support plate 5 made of chipboard, plywood, conglomerate wooden materials of conventional kind and the like, which plate has preferably the same sizes of the respective panel to be obtained as well as li mited weight, since it is made of materials with small specific gravity.

Besides, onto the external surface of the support plate 5 it is applied a covering layer 6 made of plastics with several components, in particular of a kind in which a rapid reaction occurs, such as the foamed polyurethanes, which are mixed at variable ratios thereof to saw dust, wood dust, straw or other similar waste materials, as well as also to eventual conventional filler materials such as inert fibres, kaolin etc., preferably with a minimum percentage of about 10% of the plastic which has been utilized.

Such covering layer may be obtained with variable thicknesses and is shaped in its surface with the same outline to be obtained onto the panel.

In particular, the application of the considered covering layer onto the support plate 5 may be obtained directly by a molding operation, thus attaining a close adherence of the above described mixture onto the outer surface of the plate 5, without the need that additional adhesive materials be utilized to maintain the layer 6 onto the same plate.

Alternatively, such covering layer 6 may be applied onto the plate 5 also by utilizing conventional bonding agents or adhesives, which are interposed between said covering layer said support plate.

Moreover, at least a thin coating layer 7 made of natural wooden material, which may be made of common woods, exotic or other woods, of high-quality or not, is applied onto the outer surface of the covering layer 6.

Such coating layer, constituting a veneer, is closely applied onto the covering layer 6 as hereinafter described and also has the same superficial outline of the covering layer referred to, in such a manner as to form a completed panel shaped with the required aesthetical appearance.

This panel may be utilized advantageously in the furniture manufacturing industry, to form doors, wings, drawers, frames and other elements having differently decorated outer surface, also with eventual high-relief and/or bas-relief ornamental decorations and natural wood colourings, thanks to the described coating layer, as well as also for any further applications thereof, for different industrial fields too.

Therefore, the panel referred to has an extremely limited weight with respect to the panels previously described, above all due to the presence of the support plate 5 which has a small specific gravity and additionally it has a sufficiently high strenght and stiffness, thanks to the fact that such plate isn't hollowed in its surface and thus isn't weakened structurally, as in the case previously cited.

Finally, the panel according to the invention can be obtained also in a different way than the just described panel, by utilizing always both the support plate 5 and the coating layer 7 formed by the same cited materials as well as the covering layer 6 obtained without use of the mixture foamed polyurethane-saw dust, wood dust etc.

In that case the covering layer 6 of the panel is constituted solely by conventional wood pulp and is applied onto the support plate 5 as well as is covered by the coating layer 7 in the same manners previously cited.

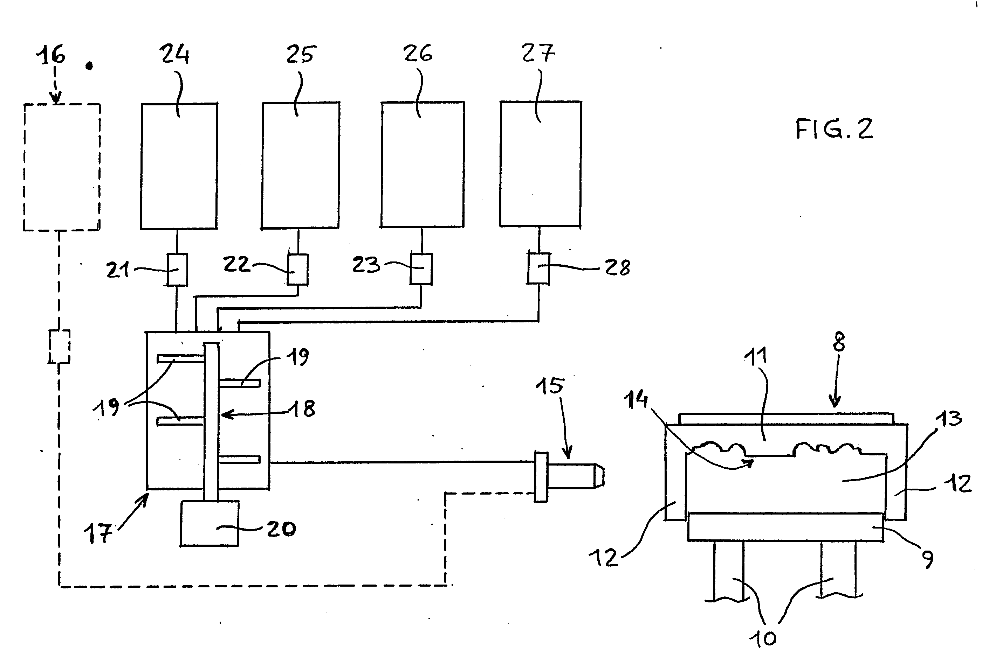

Now, let's describe the manufacturing process of the panel according to fig. 1, with particular reference to the fig. 2 too.

To this purpose, the process is substantially based upon the fact that the covering layer 6 with the relative coating layer 7 thereof are obtained by utilizing adequate movable molds, which will be better specified later, and that such covering layer is applied either directly, by means of a molding operation, onto the upper surface of the support plate 5, or indirectly by utilizing conventional bonding agents or adhesives.

The embodiment of fig. 2 shows a movable mold 8 comprising a horizontal plate 9 having sizes and form which are similar to those ones of the panels to be obtained, said plate being vertically movable and operable by conventional oleodynamic devices 10, pneumatic devices or other known devices, which are operatively connected to the relevant oleodynamic (or pneumatic) system of the machine (which system isn't shown).

Moreover, such movable mold comprises a firm matrix 11, preferably arranged above the movable plate 9 and provided with a peripheral wall 12, extended in such a way as to define laterally the movable plate 9, in the position in which the latter is raised toward the matrix 11, so as to determine a cavity 13 therebetween, in which the present panel is molded.

Likewise, the superficial outline of the impression 14 of the matrix 11, facing the cavity 13, is shaped with the same outer outline of the panel to be obtained.

Obviously, the movable mold 8 can be also obtained in manners which are different than that just described, i. e. by providing a plate 9 which is firm instead of being movable and a matrix 11 which is movable instead of being firm, whereby such plate and matrix can reciprocally operate also in a horizontal, oblique etc. direction instead of in a vertical direction, thus without departing from the protection field of the present invention.

In addition to the cited movable mold, the plant for manufacturing panels according to the invention also comprises a suitable metering device 15, for introducing the material forming the covering layer 6 inside the cavity 13 of said movable mold.

To this aim, in case in which the utilized material is wood pulp, the metering device may be obtained in a conventional manner in order to obtain a selective introduction of metered quantities of wood pulp, which is adequately contained within suitable containers 16 provided with high capacity and connected to said metering device (in the figure a sole container 16 is shown with a dashed line),at pre-determined time intervals.

On the contrary, in case in which the utilized material is the mixture foamed polyurethane-saw dust, wood dust etc., such mixture may be advantageously obtained inside an adequately dimensioned vessel 17, connected to the metering device 15, which also is obtained in a conventional way, said vessel being provided internally with a rotating mixing member 18 provided with a plurality of radial arms 19 rotatably driven by at least a conventional electric motor 20, supported by the same vessel at the outside thereof.

Besides, the vessel 17 is connected, through relevant metering pumps 21,22,23 or similar intercepting members, to separated containers 24,25,26 respectively containing the different components of the foamed polyurethane, that is the polyoils, the isocyanates and the per se known activator mixture provided for starting the rapid reaction among the polyoils and the isocyanates in order that a completed foamed product be obtained.

Finally, a further separated container 27 is connected to the vessel 17, through a relative metering pump 28 or similar member, in order to contain either filler materials to be added to the polyurethane, i.e . saw dust, wood dust, straw etc. or conventional filler materials, where such materials can be separately introduced into the container 27 or can be mixed each other with different combination possibilities and different percentages thereof.

In this way, it is possible, by acting appropriately onto the different metering pumps, to introduce selectively metered quantities of the components of the foamed polyure thane and of the specified filler materials into the vessel 17, which components and filler materials are adequately mixed together in a homogeneous manner by the action of the mixing member 18, thus starting a chemical reaction permitting the foamed polyurethane to be obtained.

Then, before the chemical reaction among the components of the polyurethane has been finished, the so obtained mixture is introduced into the cavity 13 of the movable mold, through the relevant metering device 15 thereof.

Moreover, according to the invention, the same result may be obtained by means of a plant of the same kind referred to, which is unprovided exclusively with the vessel 17 and obtained by connecting the separated containers directly to the metering device 15.

The present manufacturing process allows the panel referred to to be obtained in two different ways.

In particular, a first manufacturing way consists in that the covering layer 6 with the relevant coating layer 7 are firstly obtained, both superficially shaped with the required outline, and that the covering layer 6 is then applied directly over the support plate 5.

This is obtained firstly by introducing the described mixture, during the foaming step thereof, into the cavity 13 of the mold 8, which mixture disposes itself onto the horizontal movable plate 9 of said mold, which is initially lowered with respect to the matrix 11 of the same mold. Thereafter, a thin sheet made of natural wood, preventively cut at the requested sizes and constituting the above specified coating layer 7, is arranged onto the free surface of the mixture, which surface is facing the impression 14 of the matrix 11.

Afterwards, the movable plate 9 is raised toward the overhanging matrix 11 in such a way that the mixture and the coating layer are compressed between said movable plate and the impression 14 of said matrix, with pre-established compression forces, which are proportional to the density and the hardness of the covering layer to be obtained. In this way, both the coating layer 7 and the covering layer 6 are shaped superficially with the required outline, by the impression 14 of the matrix 11, and also are rigidly interconnected in a reciprocal superimposed position thereof, directly during the molding operation thereof, thanks to the bonding effect of the mixture constituting the foamed polyurethane, which still undergone the foaming step thereof.

Advantageously, the covering layer 6 is obtained with densities not excessively high, such as to determine anyhow a sufficient stiffness and strenght as well as a limited weight of the same layer.

This operation for molding the coating layer 7 over the covering layer 6, additionally, is carried out with a rather rapid rhytm, in order that the mixture constituting the foamed polyurethane hasn't finished its foaming reaction at the end of the same operation.

Then, the movable plate 9 of the mold is lowered again for permitting the covering layer 6 with the relative coating layer 7 to be extracted from the cavity 13.

Thereafter, a support plate 5 preventively cut at the required sizes is put onto the movable plate 9 and the covering layer 6 is disposed over the upper surface thereof, in such a manner that the coating layer 7 of this latter layer is facing again the impression 14 of the matrix 11. At this point, the movable plate 9 is raised again, so that the unit formed by the support plate 5, the covering layer 6 and the coating layer 7 is compressed between said movable plate and said impression of the matrix 11, with such compression forces as to determine a perfect adherence of the covering layer 6 onto the support plate 5, al ways by taking advantage of the bonding capacity of the mixture constituting the foamed polyurethane,and this compression force is maintained until the foaming step of the same mixture is ended.

Finally, the movable plate 9 is lowered for permitting the so formed completed panel to be extracted therefrom and additional mixture to be introduced into the cavity 13 of the movable mold 8, so as to obtain a further panel with the same operating steps as described.

This first manufacturing way of the panels may provide also, optionally, that the molding operation of the covering layer 6 onto the relative coating layer 7 be delayed until the foaming step of the mixture constituting the foamed polyurethane is ended.

Subsequently, the covering layer 6 is applied, by means of suitable bonding agents or adhesives of conventional kind which have been spread onto the surface of the support plate 5 and/or the same covering layer, directly onto the support plate by a compression action exerted between these parts and obtained either by the same movable mold 8, or also by an eventual specific separated equipment (not shown).

Besides, a second manufacturing way of the present panels consists in that both the superficial shaping of the covering layers 6 and the coating layers 7 as well as the application thereof onto the support plate 5 are obtained in a sole molding operation.

For obtaining this, the support plate 5 which has been cut in advance at the required sizes is firstly put onto the movable plate 9 of the mold 8, which plate is initially lowered with respect to the matrix 11, and then into the cavity 13 of said mold the above described mixture still undergone the foaming step thereof is introduced therein, which mixture is thus disposed onto the upper surface of said support plate.

Afterwards, the coating layer 7 constituted as described precedently, is arranged onto the upper surface of the mixture, which surface is facing the impression 14 of the matrix 11.

Thereafter, the movable plate 9 is raised toward the overhanging matrix 11, in such a manner as to cause the structure composed by the support plate 5 and both the covering layer 6 and coating layer 7 to be compressed between said movable plate and the impression 14 of said matrix, with the same criteria already described, which compression operation is delayed until the foaming step of the mixture constituting the foamed polyurethane is ended.

Thus, the panel according to the invention is directly obtained, where both the covering layer 6 and the coating layer 7 thereof are reciprocally adhering and shaped at the requested outline by the impression 14 of the matrix 11, while the support plate 5 is adhering completely to the overhanging covering layer 6, thanks to the bonding effect of the mixture constituting the foamed polyurethane.

Finally, by lowering the movable plate 9 again, it is possible to extract the completed panel from the mold and to start a subsequent working step for manufacturing a further panel in the same manner.

In this way, by utilizing this manufacturing technology it isn't more required a subsequent operating step for applying the covering layer 6 over the support plate 5, since all the constructive elements of the panel are directly assembled together and shaped by a sole molding operation, as previously described.

In case in which the wood pulp is utilized instead of the cited mixture, for obtaining the covering layer 6, it is possible to obtain each panel according to the invention by the same manufacturing ways as above described, that is by providing either two subsequent molding operations or a sole molding operation.

Then, in both cases the wood pulp contained within the container 16 is introduced, through the metering device, into the cavity 13 of the movable mold 8 in the same positions previously described with respect to the covering layer 6 and the coating layer 7 as well as the support plate 5, so that the respectively required molding operations are performed with the same criteria as described, however taking into account that the wood pulp, still acting as a bonding material interposed between the layers 6 and 7 and the support plate 5, isn't a foamed material and therefore does not require too long molding periods, as previously.

The manufacturing process according to the invention permits the panels to be obtained in a simple and rapid manner by a few operating steps, also permitting a high productive capacity and flexibility at reduced economic burdens to be achieved.

In turn, the so obtained panels present a satisfactory strenght and stiffness as well as reduced consumption of natural wood at limited weight, which facts permit the use thereof for the precedently specified uses.

Now, by examining the fig. 3, it is shown finally a panel obtained by the present manufacturing process and which is provided with a peripheral frame and a central ornamental decoration, for obtaining a furniture door.

## Claims

1) Process for manufacturing panels with decorated surfaces, in particular for the furniture industry, in order to obtain doors, wings and similar elements with high-relief and/or bas-relief decorated surface, by utilizing either conventional wood pulp or plastics with several components like the foamed polyurethanes, which are able to be mixed at variable ratios thereof to saw dust, wood dust or other similar waste materials, or also conventional filler materials, and by utilizing movable molds provided with at least a movable or firm plate and a firm or movable matrix, which is shaped as the outer outline of each panel to be obtained, said plate and matrix determining an internal cavity therebetween when they are reciprocally approached, as well as being utilizing a superficial coating layer formed by at least a thin sheet made of natural wood, characterized in that each panel is formed by molding operation, effected with one or more working steps and with pre-established compression forces, of a covering layer (6) constituted by said wood pulp or said mixture, which is preventively introduced into said internal cavity (13) and coated by said coating layer (7), onto at least an underlying support plate (5) made of chipboard, plywood, conglomerate materials and similar materials with small specific gravity.

2) Process according to claim 1, characterized in that it comprises a sole working step in which said support plate (5) is put onto said plate (9), which initially is put away from said matrix (11), and said wood pulp or said mixture, still undergone the foaming step thereof, is arranged onto the upper surface of said support plate (5); then said coating layer (7) is applied onto the upper surface of said wood pulp or said mixture, which surface is facing the impression (14) of said matrix (11); and in which said plate (9) and matrix (11) are then reciprocally approached, in such a manner as the so composed structure is contemporaneously molded thoroughly, said molding operation being delayed until the foaming step of said mixture is ended, in case in which said mixture is used as covering layer (6).

3) Process according to claim 1, characterized in that it comprises two working steps, in the first of which said wood pulp or said mixture, still undergone the foaming step thereof, is arranged onto said plate (9) which initially is put away from said matrix (11); then said coating layer (7) is disposed over the free surface of said wood pulp or said mixture, which surface is facing said impression (14) of said matrix (11); and in which said plate (9) and matrix (11) are firstly approached reciprocally so as to mold said coating layer (7) onto said wood pulp or said mixture, which latter is still undergoing the foaming step thereof or is completely foamed when said molding operation is ended, and said plate (9) and matrix (11) are then put away again to permit said coating layer (7) applied onto the so obtained covering layer (6) to be extracted therefrom; and in which the second working step consists in that said support plate (5) is put onto said plate (9) and said covering layer (6) is disposed onto the upper surface of said support plate, in such a manner as said coating layer (7) is facing again said impression (14), and characterized in that said plate (9) and said matrix (11) are reciprocally approached, in a manner that the so composed structure is contemporaneously molded, said molding operation being delayed until the foaming step of said mixture is ended, when such mixture is utilized as covering layer (6) and is still undergoing the foaming step when said first working step is ended.

4) Process according to claim 3, characterized in that the molding operation effected during said second working step may be effected also by utilizing suitable bonding agents or adhesives of conventional kind, which are interposed in advance between said covering layer (6) and said support plate (5).

5) Plant for manufacturing panels with decorated surfaces for performing the manufacturing process according to claims 1-4, characterized in that it comprises separated containers (16,24,25,26) for containing said wood pulp or the relative components of said plastics, as well as at least a further separated container (27) for containing saw dust, wood dust, straw etc. and similar waste materials as well as filler materials of conventional kind, able to be mixed solely to the components of said plastics, said containers (16,24,25,26) and said further container (27) being connected to at least a conventional metering device (15),able to introduce metered quantities of said wood pulp or said mixture into said internal cavity (13) of each movable mold (8).

6) Panel with decorated surface obtained by the manufacturing process according to claims 1-4 and the manufacturing plant according to claim 5, characterized in that it comprises at least a support plate (5) made of chipboard, plywood, conglomerate wooden materials of conventional kind and similar materials with small specific gravity, a covering layer (6) applied onto said support plate (5) and constituted by said wood pulp or said mixture, and a coating layer (7) applied onto said covering layer (6) and constituted by at least a thin sheet of natural wood, common wood, exotic wood or other kind of wood.

FIG.3

7  6  5  4

FIG.1

FIG.2

0 273 301